# EUROPÄISCHE PATENTSCHRIFT

(11) **EP 2 859 050 B1**
(45) Veröffentlichungstag und Bekanntmachung des Hinweises auf die Patenterteilung: **08.06.2016**
(21) Anmeldenummer: 14722098.2
(22) Anmeldetag: 17.04.2014
(51) Int. Cl.: C08L 95/00, C08L 23/00, C08L 53/02, C04B 20/10, C08K 3/34

(54) **MASSE ZUM BEFÜLLEN VON FUGEN UND/ODER RISSEN**
MASS FOR FILLING JOINTS AND/OR CRACKS
MASSE DE JOINTOIEMENT

(30) Priorität: 22.04.2013 DE 102013006848
(43) Veröffentlichungstag der Anmeldung: 15.04.2015
(73) Patentinhaber: DENSO-Holding GmbH & Co., 51371 Leverkusen (DE)
(72) Erfinder: KAISER, Thomas Markus, 52459 Inden (DE)
(74) Vertreter: Geskes, Christoph
(86) Internationale Anmeldenummer: PCT/EP2014/001036
(87) Internationale Veröffentlichungsnummer: WO 2014/173513

(56) Entgegenhaltungen:
- EP-A2- 2 557 230
- DE-A1- 4 416 567

## Beschreibung

Die vorliegende Erfindung betrifft eine Masse zum Ausfüllen und Verfüllen von Fugen und/oder Rissen, vorzugsweise in horizontalen und/oder in vertikalen Flächen, bevorzugt in Betonbauteilen und/oder Fahrbahndecken, sowie ein Verfahren zur Verfüllung einer Fuge und/oder eines Risses.

Massen zum Ausfüllen und Verfüllen von Fugen und/oder Rissen sind vielfältig bekannt. So werden beispielsweise bitumenhaltige Massen als Fugenmaterial insbesondere in Verkehrswegen eingesetzt, denn Bitumen ist ein relativ günstiges Produkt der Erdöldestillation, das aufgrund seiner elasto-plastischen Eigenschaften nicht nur als Bindemittel in Asphalt, sondern insbesondere auch in einer elastomer-modifizierten, das heißt polymermodifizierten Form als Fugenmaterial eingesetzt wird.

Fugenmassen auf Bitumenbasis werden insbesondere als Heißvergussmassen oder in Form von Bitumenfugenbändern zum Ausfüllen von horizontal angeordneten Fugen und/oder Rissen eingesetzt. Diese sind insbesondere in den "Zusätzlichen technischen Vertragsbedingungen und Richtlinien für Fugen in Verkehrsflächen, Ausgabe 2001 (ZTV Fug-StB 01)" angesprochen. Auch EP 2557230 offenbart Fugenbänder mit aktivierbarer Klebeschicht Grundsätzlich weist Bitumen eine gute Resistenz gegenüber wässrigen Säuren und Laugen auf. Daher werden z. B. Asphaltflächen, insbesondere aus Gussasphalt, auch im Bereich von LAU-Anlagen (Anlagen zum Lagern, Abfüllen und Umschlagen wassergefährdender Stoffe), z. B. Tankstellen, beziehungsweise JGS-Anlagen (Anlagen zum Lagern und/oder Abfüllen von Wirtschaftsdünger, insbesondere Gülle auch künstliche, oder Festmist, Jauche, tierischen Ausscheidungen nicht landwirtschaftlicher Herkunft, auch in Mischung mit Einstreu oder in verarbeiteter Form, Flüssigkeiten, die während der Herstellung oder Lagerung von Gärfutter durch Zellaufschluss oder Pressdruck anfallen (Silagesickersaft) oder Silage oder Siliergut sowie Gärsäure) wie beispielsweise Fahrsilos, Erdbecken, Silos, Güllekeller und -kanäle, Festmistplatten und Abfüllflächen mit den zugehörigen Rohrleitungen gebaut. Bei besonders belasteten Flächen, insbesondere LAU-Anlagen, aber auch JGS-Anlagen, besteht ein Bedarf an Fugen- und Rissverfüllmassen, die mit Asphalt verträglich sind. Typischerweise werden in diesem Bereich für horizontale Fugen Bitumenheißvergussmassen oder Bitumenfugenbänder verwendet, für vertikale Fugen jedoch insbesondere solche auf Grundlage von Polysulfiden und/oder Polyurethanen.

Beispielsweise in Fahrsilos, welche oftmals auch mit Gussasphaltböden ausgestattet sind, besteht bei Anschlüssen von horizontalen an vertikalen Fugen und umgekehrt das Problem, dass unterschiedliche Materialien zum Einsatz kommen. So werden dabei oftmals für die horizontalen Fugen Bitumenvergussmassen eingesetzt, wohingegen für die vertikalen Fugen polysulfidbasierte oder polyurethanbasierte Massen Verwendung finden. Aufgrund der unterschiedlichen Materialeigenschaften weisen insbesondere an Kontaktstellen, beispielsweise beim Übergang von einer horizontalen in eine vertikale Fuge, die eingesetzten Materialien eine schlechte Haftung oder, noch ungünstiger, eine Materialunverträglichkeit mit Wechselwirkungen wie z. B. Weichmacherwanderung zueinander auf. Die entsprechenden Kontaktstellen stellen daher Schwachpunkte dar, an welche die Forderungen einer hinreichenden Abdichtung gegen das Austreten von umweltgefährdenden Flüssigkeiten versagen.

Es besteht daher ein Bedarf an Fugen- und Rissverfüllmassen, welche diese aus dem Stand der Technik bekannten Probleme lösen.

Die vorliegende Erfindung hat daher die Aufgabe, eine Masse zum Ausfüllen und Verfüllen von Fugen und/oder Rissen als auch ein entsprechendes Verfahren zur Verfügung zu stellen, durch welche die aus dem Stand der Technik bekannten Nachteile, insbesondere beim Anschluss von horizontalen an vertikale Fugen, vermieden werden.

Diese Aufgabe wird erfindungsgemäß gelöst durch eine Masse zum Ausfüllen und Verfüllen von Fugen und/oder Rissen, umfassend
- mindestens ein Bitumen in einer Menge in einem Bereich von etwa 30 Gew.-% bis etwa 75 Gew.-%;
- mindestens ein Elastomer, ausgewählt aus einer Gruppe umfassend Styrol-Butadien-Copolymere, Styrol-Butadien-Stryrol-(Block-)Copolymere, Styrol-Isopren-Styrol-(Block-)Copolymere, Styrol-Isopren-(Block-)Copolymere, synthetische und/oder natürliche Kautschuke, in einer Menge in einem Bereich von etwa 2,5 Gew.-% bis etwa 22 Gew.-%;
- mindestens einen pulverförmigen mineralischen Füllstoff in einer Menge in einem Bereich von etwa 12 Gew.-% bis etwa 35 Gew.-%;
- mindestens ein faserförmiges Stellmittel zur Einstellung der Festigkeit, ausgewählt aus einer Gruppe umfassend Cellulose, Glasfasern und/oder Kunststofffasern, in einer Menge in einem Bereich von etwa 0,5 Gew.-% bis etwa 5 Gew.-%; und
- mindestens ein Polymer, hergestellt aus einem Olefin und einer α, β-ungesättigten Carbonsäure und/oder einem α, β-ungesättigtem Carbonsäureanhydrid, in einer Menge in einem Bereich von etwa 0,1 Gew.-% bis etwa 8 Gew.-%, bevorzugt bis etwa 5 Gew.-%,
wobei die Gewichtsprozente jeweils bezogen sind auf die Gesamtmenge der Masse.

Soweit in der vorliegenden Anmeldung der Begriff "etwa" in Hinblick auf Bereiche, insbesondere Gewichtsprozentbereiche oder Bereiche der Faserlängen oder Faserdicken, verwendet wird, ist hierunter zu verstehen, dass geringfügige Abweichungen von den angegebenen Bereichen aus dem Schutzbereich, der durch die Angaben in den Patentansprüchen vermittelt wird, nicht hinausführen. Insbesondere sind Abweichungen von +/- 10 Prozent, bevorzugt +/- 5 Prozent, bezogen auf die jeweilige Angabe, von dem Begriff "etwa" abgedeckt.

Soweit in der vorliegenden Anmeldung der Begriff "Bitumen" verwendet wird, ist hierunter insbesondere ein Bitumen mit einer Nadelpenetration bei 25 °C in Übereinstimmung mit der DIN EN 1426 (Maßeinheit 0,1 mm) in einem Bereich von etwa 80 bis etwa 300, bevorzugt in einem Bereich von etwa 140 bis etwa 250, noch weiter bevorzugt in einem Bereich von etwa 160 bis etwa 220, zu verstehen. Besonders bevorzugt wird dabei Bitumen eingesetzt, welches für den Straßenbau geeignet ist, in Anlehnung an die DIN 1995-1. Bevorzugt umfasst die erfindungsgemäße Masse das mindestens eine Bitumen in einer Menge in einem Bereich von etwa 40 Gew.-% bis etwa 65 Gew.-%, weiter bevorzugt in einer Menge von etwa 45 Gew.-% bis etwa 58 Gew.-%, noch weiter bevorzugt in einer Menge in einem Bereich von etwa 42 Gew.-% bis etwa 56 Gew.-%.

Im Sinne der vorliegenden Erfindung wird unter dem Begriff "Elastomer" ein Polymer mit gummielastischem Verhalten, das bei Raumtemperatur wiederholt mindestens auf das zweifache seiner Länge gedehnt werden kann und nach Aufhebung des für die Dehnung erforderlichen Zwanges sofort wieder annähernd die Ausgangslänge einnimmt, verstanden. Besonders bevorzugt im Sinne der vorliegenden Erfindung wird das mindestens eine Elastomer ausgewält aus einer Gruppe umfassend Styrol-Butadien-Copolymere, Styrol-Butadien-Styrol-(Block-)Copolymere, Styrol-Isopren-(Block-)Copolymere, Styrol-Isopren-Styrol-(Block-)Copolymere, Butadien-Kautschuke, Butyl-Kautschuke, halogenierte Butyl-Kautschuke und/oder natürliche Kautschuke. Das mindestens eine Elastomer kann dabei vorzugsweise in Form eines Mehls, weiter bevorzugt in Form eines Gummimehls, der Mischung zugegeben werden. Vorzugsweise liegt bei Zugabe des mindestens einen Elastomeren in Form eines Mehles die Körnung in einem Bereich von > 0 mm bis etwa 0,5 mm. Bei Einsatz des mindestens einen Elastomeren in Form eines Mehles kann dieses vorteilhafterweise auch eine Mischung unterschiedlicher Elastormere darstellen, und bespielsweise aus einer Mischung umfassend natürliche Kautschuke, Styrol-Butadien-Kautschuke, Styrol-Isopren-Styrol-Copolymere, Styrol-Isopren-Copolymere, Butadien-Kautschuke und/oder Butyl-Kautschuke beziehungsweise halogenierte Kautschuke bestehen. Besonders bevorzugt wird als Elastomer eingesetzt ein Styrol-Isopren-Styrol-Copolymer, insbesondere wenn dieses als Blockcopolymer ausgebildet ist, bevorzugt in Form eines Styrol-Isopren-Styrol/Styrol-Isopren-Blockcopolymers. Weiter vorteilhafterweise wird als Elastomer eingesetzt eine Mischung aus einem Styrol-Butadien-Styrol-Copolymeren, gegebenenfalls auch Blockcopolymeren, und/oder einem Styrol-Isopren-Styrol-Copolymeren oder aber Blockcopolymeren in Mischung mit einem Mehl, welches ein Rezyclat darstellt, vorzugsweise aus Automobilreifen, und dabei eine Mischung eines natürlichen Kautschukes, eines Styrol-Butadien-Kautschukes, eines Butadien-Kautschukes, eines Butyl-Kautschukes und/oder eines halogenierten Butyl-Kautschukes darstellt.

Besonders bevorzugt wird das mindestens eine Elastomer in einer Menge von etwa 2 Gew.-%, bevorzugt etwa 5 Gew.-%, bis etwa 20 Gew.-%, weiter bevorzugt in einer Menge von etwa 8 Gew.-% bis etwa 16 Gew.-%, noch weiter bevorzugt in einer Menge von etwa 11 Gew.-% bis etwa 15 Gew.-%, in der erfindungsgemäßen Masse eingesetzt, wobei die Gewichtsprozente jeweils bezogen sind auf die Gesamtmenge der Masse. Besonders bevorzugt weist die erfindungsgemäße Masse das mindestens eine Elastomer, insbesondere ausgebildet als Styrol-Isopren-Styrol-(Block-)Copolymer und/oder Styrol-Butadien-Styrol-(Block-)Copolymer, beide insbesondere in Form von Blockcopolymeren, in einer Menge in einem Bereich von etwa 2,5 Gew.-% bis etwa 10 Gew.-%, weiter bevorzugt in einer Menge von etwa 5 Gew.-% bis etwa 9 Gew.-%, als auch ein weiteres Elastomer auf der Basis eines Mehles, gewonnen als Rezyclat, bevorzugt aus Automobilreifen, umfassend eine Mischung verschiedener Elastomere wie vorstehend erwähnt, in einer Menge von etwa 3 Gew.-% bis etwa 12 Gew.-%, weiter bevorzugt eine Menge von etwa 5 Gew.-% bis etwa 8 Gew.-%, auf.

Der mindestens eine pulverförmige mineralische Füllstoff im Sinne der vorliegenden Erfindung ist vorzugsweise ausgewählt aus einer Gruppe umfassend Silikate, Phosphate und/oder Sulfate. Weiter bevorzugt ist der pulverförmige mineralische Füllstoff karbonatfrei. Besonders bevorzugt im Sinne der vorliegenden Erfindung ist der mindestens eine pulverförmige mineralische Füllstoff ausgewählt aus einer Gruppe umfassend Magnesiumsilikate, insbesondere ein Talkum. Der mindestens eine pulverförmige mineralische Füllstoff kann dabei auch in einer Mischung mit beispielsweise einem Chlorit eingesetzt werden. Besonders bevorzugt ist der mindestens eine pulverförmige mineralische Füllstoff in einer Menge in einem Bereich von etwa 14 Gew.-% bis etwa 30 Gew.-%, weiter bevorzugt in einer Menge in einem Bereich von etwa 15 Gew.-% bis etwa 23 Gew.-%, jeweils bezogen auf die Gesamtmenge der erfindungsgemäßen Masse, eingesetzt.

Weiter bevorzugt umfasst die erfindungsgemäße Masse mindestens ein faserförmiges Stellmittel, welches zur Einstellung der Festigkeit, insbesondere der Standfestigkeit, dient. Mittels dieses faserförmigen Stellmittels kann insbesondere auch die Verarbeitungskonsistenz der erfindungsgemäßen Masse eingestellt werden. Dabei ist das mindestens eine faserförmige Stellmittel vorteilhafterweise in einer Menge in einem Bereich von etwa 1 Gew.-% bis etwa 4,5 Gew.-%, weiter bevorzugt in einer Menge in einem Bereich von etwa 1,6 Gew.-% bis etwa 3 Gew.-%, jeweils bezogen auf die Gesamtmenge der erfindungsgemäßen Masse, in dieser enthalten. Vorteilhafterweise ist das mindestens eine faserförmige Stellmittel ausgewählt aus einer Gruppe umfassend Cellulose, Glasfasern und/oder Kunststofffasern, und ist besonders bevorzugt aus einer Gruppe umfassend Cellulose-Fasern. Das mindestens eine Stellmittel weist dabei vorzugsweise eine durchschnittliche Faserlänge in einem Bereich von etwa 500 µm bis etwa 1500 µm auf, weiter bevorzugt eine Faserlänge in einem Bereich von etwa 800 µm bis etwa 1500 µm. Weiter bevorzugt weist das mindestens eine faserförmige Stellmittel eine durchschnittliche Faserdicke in einem Bereich von etwa 20 µm bis etwa 80 µm auf, weiter bevorzugt eine solche in einem Bereich von etwa 30 µm bis etwa 60 µm.

Im Sinne der vorliegenden Erfindung umfasst die erfindungsgemäße Masse weiterhin mindestens ein Polymer, welches sich von dem weiter vorstehend beschriebenen mindestens einem Elastomeren unterscheidet, und hergestellt ist aus einem Olefin und insbesondere einer α, β-ungesättigten Carbonsäure und/oder insbesondere α, β-ungesättigtem Carbonsäureanhydrid. Dieses ist vorteilhafterweise in einer Menge in einem Bereich von etwa 0,5 Gew.-% bis etwa 2,8 Gew.-%, weiter bevorzugt etwa 0,8 Gew.-% bis etwa 2 Gew.-%, noch weiter bevorzugt in einer Menge in einem Bereich von etwa 0,9 Gew.-% bis etwa 1,4 Gew.-%, in der erfindungsgemäßen Masse enthalten, wobei die Gewichtsprozente jeweils bezogen sind auf die Gesamtmenge der erfindungsgemäßen Masse. Besonders bevorzugt ist das Polymer hergestellt aus einem Olefin, ausgewählt aus einer Gruppe umfassend Ethylen und/oder Propylen oder Vinylalkohol, und Maleinsäureanhydrid. Statt Maleinsäureanhydrid wäre auch zum Beispiel Acrylsäure möglich einzusetzen. Auch können lonomere der genannten Polymere eingesetzt werden. Besonders bevorzugt werden als Polymere des Maleinsäureanhydrides Copolymere oder gepfropfte Polymere des Maleinsäureanhydrides mit Propylen und/oder Ethylen eingesetzt. Möglich ist der Einsatz von statistischen Copolymeren mit einem Anteil an Maleinsäureanhydrid von < 50 Mol-% als auch alternierende Copolymere mit einem Maleinsäureanhydrid-Anteil von 50 Mol-%. Dabei können eine Vielzahl von Monomeren unterschiedlicher Struktur eingesetzt werden. Bevorzugt wird das mindestens eine Polymer eingesetzt in Form von Pastillen, mit einem mittleren Durchmesser in einem Bereich von etwa 7 mm bis etwa 10 mm. Die Dichte des eingesetzten Polymeren, bevorzugt die Dichte des eingesetzten Maleinsäureanhydridcopolymeren, liegt in einem Bereich von etwa 0,90 g/cm³ bis etwa 0,935 g/cm³, gemessen gemäß ISO 1183. Besonders bevorzugt im Sinne der vorliegenden Erfindung wird als Polymer ein Ethylen-Maleinsäureanhydrid-Copolymer in den vorstehend genannten Gewichtsprozentbereichen, vorzugsweise als statistisches, aber auch als alternierendes Copolymer, eingesetzt, besonders bevorzugt ein gepfropftes. Das eingesetzte Polymer aus Ethylen und/oder Propylen und Maleinsäureanhydrid oder Acrylsäure weist vorzugsweise eine Viskosität nach Brookfield bei einer Temperatur von 140°C in einem Bereich von etwa 400 bis etwa 3000 mPa*s, weiter bevorzugt in einem Bereich von etwa 500 mPa*s bis etwa 2000 mPa*s, auf. Bevorzugt weist das aus Ethylen und/oder Propylen und Maleinsäureanhydrid oder Acrylsäure hergestellte Polymer einen Tropfpunkt gemäß ASTM D3954 in einem Bereich von etwa 85°C bis etwa 125°C, weiter bevorzugt in einem Bereich von etwa 90°C bis etwa 115°C auf, gemessen beispielsweise mit einem Tropfpunktanalysesystem DP70 der Mettler-Toledo AG, Schwerzenbach, Schweiz. Das mindestens eine Polymere dient vorteilhafterweise als Kompatibilisator, um insbesondere die Einbindung des mindestens einen faserförmigen Stellmittels, aber auch des pulverförmigen mineralischen Füllstoffes in der erfindungsgemäßen Masse zu ermöglichen. Darüber hinaus wird durch das mindestens eine Polymer auch der Erweichungspunkt der erfindungsgemäßen Masse erhöht, beziehungsweise die Schmelzviskosität desselben verringert. Bezüglich der beiden zuletzt genannten Eigenschaften ähnelt damit das eingesetzte Polymer einem vorteilhafterweise in der erfindungsgemäßen Mischung eingesetzten Wachs, wozu weiter unten Ausführungen getroffen werden.

Weiter bevorzugt kann die erfindungsgemäße Masse mindestens ein Wachs umfassen in einer Menge in einem Bereich von etwa 0,5 Gew.-% bis etwa 3 Gew.-%, weiter bevorzugt in einer Menge in einem Bereich von etwa 1 Gew.-% bis etwa 2 Gew.-%, jeweils bezogen auf die Gesamtmenge der erfindungsgemäßen Masse. Besonders bevorzugt wird dabei das Wachs ausgewählt aus einer Gruppe umfassend Fischer-Tropsch-Wachse und/oder Montanwachse. Das mindestens eine Wachs wird vorteilhafterweise eingesetzt zur Erhöhung des Erweichungspunktes der erfindungsgemäßen Masse beziehungsweise der Verringerung der Schmelzviskosität derselben.

Die erfindungsgemäße Masse umfasst weiterhin vorteilhafterweise mindestens einen Weichmacher, ausgewählt aus der Gruppe der aliphatischen und/oder naphthenischen Öle, in einer Menge in einem Bereich von etwa 5 Gew.-% bis etwa 15 Gew.-%, weiter bevorzugt in einer Menge in einem Bereich von etwa 8 Gew.-% bis etwa 12 Gew.-%, jeweils bezogen auf die Gesamtmenge der erfindungsgemäßen Mischung. Besonders bevorzugt umfasst die erfindungsgemäße Masse mindestens ein naphthenisches Prozessöl als Weichmacher. Der mindestens eine Weichmacher weist vorteilhafterweise eine Dichte bei 25°C gemäß ISO 12185 in einem Bereich von etwa 0,89 kg/dm³ bis etwa 0,915 kg/dm³ auf. Er weist vorteilhafterweise eine Viskosität bei 40 °C gemäß ISO 3104 in einem Bereich von etwa 50 mm²/s (cSt), bevorzugt etwa 130 mm²/s(cSt), bis etwa 170 mm²/s(cSt), bevorzugt bis etwa 155 mm²/s (cSt), auf.

Die erfindungsgemäße Masse weist vorteilhafterweise einen Erweichungspunkt gemäß DIN EN 1427 von größer gleich etwa 85 °C, weiter bevorzugt größer gleich etwa 90 °C, auf. Weiter bevorzugt weist die erfindungsgemäße Masse eine Konus-Penetration gemäßDIN EN 13880-2 bei 25 °C in einem Bereich von etwa 40 bis etwa 130 1/10 mm, weiter bevorzugt in einem Bereich von etwa 50 bis etwa 110 1/10 mm, auf. Weiter bevorzugt weist diese ein elastisches Rückstellvermögen gemäß DIN EN 12880-3 von kleiner gleich etwa 60 %, weiter bevorzugt kleiner gleich etwa 50 %, auf.

Die erfindungsgemäße Masse weist den großen Vorteil auf, dass diese aufgrund ihrer hohen Standfestigkeit auch bei Temperaturen von bis zu etwa 70 °C eingesetzt werden kann, und zwar insbesondere auch im Bereich vertikaler Fugen und Risse. Durch ihre spezifischen Eigenschaften kann die erfindungsgemäße Masse damit sowohl in horizontalen als auch in vertikalen Flächen und dabei auch bei Anschlüssen von horizontalen Fugen beziehungsweise Rissen an vertikale Fugen beziehungsweise Risse eingesetzt werden, sodass sich die aus dem Stand der Technik bekannten Unverträglichkeitsprobleme nicht stellen. Dadurch kann die erfindungsgemäße Masse vorteilhaft insbesondere bei Betonbauteilen oder Fahrbahndecken, die aggressiven Medien ausgesetzt sind, wie dies in LAU-Anlagen beziehungsweise in JGS-Anlagen der Fall ist, sowohl für horizontale als auch vertikale Verwendungen eingesetzt werden. Die erfindungsgemäße Masse kann dabei insbesondere in überfahrenen Fugen in Asphalt- und Betonflächen eingesetzt werden, das heißt Fugen, aber auch Risse, die durch Nutzfahrzeuge wie Traktoren, Lkws oder Pkws überfahren werden. Zudem ist die erfindungsgemäße Masse vorteilhafterweise beständig gegenüber aggressiven Medien auch über lange Zeiträume. Sie ist einkomponentig und damit einfach zu verarbeiten. Sie wird bevorzugt erwärmt bzw. heiß verarbeitet bei Temperaturen in einem Bereich von etwa 90°C bis etwa 200°C, bevorzugt in einem Bereich von etwa 100°C bis etwa 160°C.

Darüber hinaus ermöglicht die erfindungsgemäße Masse auch eine gute Verbindung bei Anschlüssen zu anderen Bitumenfugenmassen, da eine Diffusion in diese und aus diesen in die erfindungsgemäße Masse auch nach Abkühlung ermöglicht ist. Auch können Fugen und Risse einfach Instand gesetzt werden, insbesondere Wartungsfugen, da sich die erfindungsgemäße Masse gut an älteres Bitumenfugenmaterial anbauen lässt und sich beispielsweise mit einem heißen Messer oder Spachtel einfach nacharbeiten lässt.

Weiterhin kann die erfindungsgemäße Masse auch sonstige übliche Additive umfassen. Insbesondere kann die erfindungsgemäße Masse umfassen Antioxidationsmittel, thermische Stabilisationsmittel und sonstige Stabilisatoren. Soweit Antioxidationsmittel vorgesehen werden, sind diese in der erfindungsgemäßen Masse zugegen in einer Menge in einem Bereich von etwa 0,05 Gew.-% bis etwa 0,8 Gew.-%, bevorzugt in einer Menge in einem Bereich von etwa 0,15 Gew.-% bis etwa 0,45 Gew.-%, wobei die Gew.-% jeweils bezogen sind auf die Gesamtmenge der erfindungsgemäßen Masse. Soweit in der erfindungsgemäßen Masse thermische Stabilisationsmittel und sonstige Stabilisatoren zugegen sind, sind diese von dieser umfasst in einer Menge in einem Bereich von etwa 0,1 Gew.-% bis etwa 1 Gew.-%, weiter bevorzugt in einer Menge in einem Bereich von etwa 0,15 Gew.-% bis etwa 0,6 Gew.-%, wobei die Gew.-% jeweils bezogen sind auf die Gesamtmenge der erfindungsgemäßen Masse.

Besonders bevorzugt umfasst die erfindungsgemäße Masse etwa 45 Gew.-% bis etwa 60 Gew.-% mindestens eines Bitumens, insbesondere eines Bitumens mit einer Nadelpenetration in einem Bereich von etwa 160 bis etwa 220, als Elastomer mindestens ein Styrol-Isopren-Styrolblockcopolymer in einer Menge in einem Bereich von etwa 5 Gew.-% bis etwa 10 Gew.-%, Gummimehl, insbesondere als Rezyklat, in einer Menge in einem Bereich von etwa 4 Gew.-% bis etwa 10 Gew.-%, mindestens ein Wachs, insbesondere ein Montanwachs, in einer Menge in einem Bereich von etwa 1 Gew.-% bis etwa 2 Gew.-%, als faserförmiges Stellmittel Cellulose, insbesondere Cellulose mit einer durchschnittlichen Faserlänge in einem Bereich von etwa 600 µm bis etwa 1500 µm, in einer Menge in einem Bereich von etwa 1 Gew.-% bis etwa 4 Gew.-%, mindestens ein gepropftes Polymer, hergestellt aus Ethylen und/oder Propylen und Maleinsäureanhydrid, in einer Menge in einem Bereich von etwa 0,5 Gew.-% bis etwa 5 Gew.-% und einem Tropfpunkt in einem Bereich von etwa 100°C bis etwa 120°C, gemessen gemäß ASTM D3954, sowie mindestens ein Prozessöl als Weichmacher in einer Menge in einem Bereich von etwa 5 Gew.-% bis etwa 16 Gew.-%, als mineralischen Füllstoff Talkum in einer Menge in einem Bereich von etwa 13 Gew.-% bis etwa 22 Gew.-%, sowie gegebenenfalls weitere Additive wie Antioxidantien, thermische Stabilisatoren und sonstige Stabilisationsmittel in einer Menge insgesamt in einem Bereich von 0,2 Gew.-% bis etwa 1 Gew.-%, wobei die vorgenannten Gew.-%-Angaben jeweils bezogen sind auf die Gesamtmenge der Masse.

Die erfindungsgemäße Masse zum Ausfüllen von Fugen und/oder Rissen wird vorzugsweise in Kombination mit einem Haftvermittler in Form eines Voranstriches und/oder mindestens einem Hinterfüllprofil verarbeitet. Die vorliegende Erfindung betrifft daher auch ein System, umfassend die erfindungsgemäße Masse zum Ausfüllen und Verfüllen von Fugen und/oder Rissen, wie vorstehend beschrieben, als auch mindestens einen Haftvermittler und/oder mindestens ein Hinterfüllprofil. Bevorzugt ist genau ein Haftvermittler vorgesehen. Der Haftvermittler dient insbesondere der Zurverfügungstellung einer besseren Haftung, insbesondere in Vertikalfugen bzw. -rissen, insbesondere an Kontaktflächen, die aus Beton, Gussasphalt, Walzasphalt, Stahl bzw. Edelstahl, aber auch halbstarren Deckschichten. Halbstarre Deckschichten werden auch als halbstarrer Belag oder vermörtelter Belag bezeichnet. Es sind bitumengebundene Bodenbeläge mit einem bitumengebundenen Traggerüst, dessen Hohlräume mit einem Mörtel gefüllt sind.

Der Haftvermittler kann insbesondere ausgebildet sein auf Grundlage einer Mischung umfassend etwa 2 Gew.-% bis etwa 9 Gew.-% mindestens eines Styrol-Isopren-Polymers, insbesondere Blockpolymers, insbesondere Triblockpolymers, insbesondere mit etwa 10 % bis etwa 20 % Styrol in der Masse, etwa 16 Gew.-% bis etwa 40 Gew.-% mindestens eines Kohlenwasserstoffharzes, insbesondere eines cyclischen und/oder linearen aliphatischen Kohlenwasserstoffharzes, insbesondere mit einem Erweichungspunkt in einem Bereich von etwa 80 °C bis etwa 110 °C, und etwa 54 Gew.-% bis etwa 82 Gew.-% mindestens eines Lösemittels, insbesondere eines linearen oder cyclischen aliphatischen und/oder aromatischen Lösemittels, insbesondere Benzin und/oder Xylol, insbesondere mit einer Dichte (20 °C) gemäß DIN 51757 in einem Bereich von etwa 0,67 bis etwa 0,95 g/ml. Besonders bevorzugt ist der Haftvermittler ausgebildet auf Grundlage einer Mischung umfassend etwa 2 Gew.-% bis etwa 9 Gew.-% mindestens eines Styropol-Isopren-Polymers wie vorstehend beschrieben, etwa 8 Gew.-% bis etwa 20 Gew.-% eines insbesondere linearen aliphatischen Kohlenwasserstoffharzes, vorzugsweise einem solchen mit einem Erweichungspunkt in einem Bereich von etwa 90 °C bis 110 °C, eines cycloaliphatischen Kohlenwasserstoffharzes in einer Menge in einem Bereich von etwa 8 Gew.-% bis 20 Gew.-%, vorzugsweise mit einem solchen mit Erweichungspunkt in einem Bereich von etwa 80 °C bis etwa 95 °C, etwa 50 Gew.-% bis etwa 70 Gew.-% Benzin als Lösemittel mit einer Dichte in einem Bereich von etwa 0,67 g/ml bis etwa 0,77 g/ml bei 20 °C gemäß DIN 51757, und etwa 4 Gew.-% bis etwa 12 Gew.-% Xylol als aromatisches Lösemittel. Besonders bevorzugt umfasst die Mischung des Haftvermittlers etwa 4 Gew.-% bis etwa 6 Gew.-% des mindestens einen Styrol-Isopren-Polymers wie vorstehend beschrieben, etwa 10 Gew.-% bis etwa 15 Gew.-% mindestens eines insbesondere linearen aliphatischen Kohlenwasserstoffharzes, etwa 10 Gew.-% bis etwa 15 Gew.-% mindestens eines cycloaliphatischen Kohlenwasserstoffharzes, wie vorstehend beschrieben, etwa 58 Gew.-% bis etwa 65 Gew.-% mindestens eines linearen und/oder cyclischen aliphatischen Lösemittels, sowie etwa 5 Gew.-% bis etwa 9 Gew.-% mindestens eines aromatischen Lösemittels, insbesondere Xylol.

Alternativ kann der Haftvermittler auch eine Zusammensetzung aufweisen wie die in der EP 2 557 230 A2 offenbarte Kleberschicht. Insbesondere ist der Haftvermittler im Sinne der vorliegenden Erfindung damit ein solcher, welcher bitumenhaltig ist und Styrol-Isopren-Copolymere und/oder Styrol-Butadien-Blockcopolymere, aliphatische Kohlenwasserstoffharze, sowie Mineralöl als auch als Füllmaterial insbesondere Kalksteinmehl oder Ähnliches umfasst. Vorteilhafterweise umfasst die Klebeschicht mindestens ein thermoplastisches Harz, insbesondere in Form eine Kohlenwasserstoffharzes, in einer Menge in einem Bereich von etwa 30 Gew.-% bis etwa 60 Gew.%, bezogen auf die Gesamtmasse des Haftvermittlers. Das Hinterfüllprofil dient dazu, insbesondere eine 3-Seitenhaftung zu vermeiden. Es verhindert die Ausbildung einer Haftung der Masse an z.B. einem Fugen- oder Rissgrund.

Die vorliegende Erfindung betrifft weiterhin die Verwendung der erfindungsgemäßen Masse, wie vorstehend beschrieben, zur Verfüllung von Fugen und/oder Rissen in horizontalen und/oder vertikalen Flächen, insbesondere in Betonbauteilen und/oder Fahrbahndecken. Besonders bevorzugt wird die erfindungsgemäße Masse eingesetzt in vertikal ausgerichteten Fugen und/oder Rissen. Ganz besonders bevorzugt wird die erfindungsgemäße Masse verwendet zur Verfüllung von Fugen und/oder Rissen in LAU-Anlagen und/oder JGS-Anlagen, insbesondere zur Verfüllung von Fugen und/oder Rissen in horizontalen und/oder vertikalen Flächen dort selbst, insbesondere der eingangs in der allgemeinen Beschreibung genannten diesbezüglichen Anlagen und Flächen, insbesondere Fahrsiloanlagen.

Besonders bevorzugt ist die Verwendung der erfindungsgemäßen Masse in Fahrsiloanlagen.

Die vorliegende Erfindung betrifft weiterhin ein Verfahren zur Verfüllung einer Fuge und/oder eines Risses mit einer erfindungsgemäßen Masse, wobei die Masse erwärmt und mittels einer Kartuschenpistole oder eines Handextruders in eine Fuge oder einen Riss eingebracht wird. Bei Vertikalfugen oder -rissen wird vorteilhafterweise eine Kartuschenpistole mit erwärmter Kartusche oder erwärmter Masse, die in die Kartusche eingebracht wird, eingesetzt. Für Horizontalfugen oder -risse können auch andere Verfahren eingesetzt werden, so beispielsweise der Einsatz von Heißvergusskochern, insbesondere solchen mit Austraglanze und Pumptechnik. Auch kann die erfindungsgemäße Masse durch Vergießen, Austrag aus einer Düse, Zwangsförderung aus einem Behälter jeglicher Art oder sonstige bekannte Techniken verarbeitet werden. Bevorzugt erfolgt bei dem erfindungsgemäßen Verfahren die Erwärmung der Masse in der Kartuschenpistole durch Einlegung der Pistole in einen zwei- oder mehrteiligen Aufheizungsblock, der aber auch einteilig ausgebildet sein kann, mit mindestens einer in diesem angeordneten Heizpatrone oder Heizstab. Alternativ hierzu kann die Erwärmung auch beispielsweise durch Erwärmung der gefüllten Kartuschenpistole in einem elektrischen oder mit Gas beheizten Ofen erfolgen. Wird für das erfindungsgemäße Verfahren ein Aufheizblock eingesetzt, so ist vorteilhafterweise vorgesehen, dass dieser mindestens zwei, bevorzugt mindestens drei, weiter bevorzugt mindestens vier Kartuschenpistolen aufnehmen kann. Vorteilhafterweise besteht der Aufheizblock aus Metall, weiter vorteilhafterweise aus Eisen und/oder Aluminium oder entsprechenden, insbesondere gut wärmeübertragenden Legierungen. Die Kartuschen werden mit der erfindungsgemäßen Masse entweder im schmelzflüssigen Zustand oder in Form von vorgefertigten Riegeln oder in Granulatform befüllt.

Die erfindungsgemäße, viskoelastische Masse ist vorteilhafterweise bei Raumtemperatur (25 °C) fest, und geht bei Temperaturen von über 85 °C in einen pastösen Zustand über. Die dynamische Viskosität, gemessen gemäß DIN EN 13702, liegt vorteilhafterweise bei einer Temperatur von 85 °C in einem Bereich von etwa 55 Pa · s bis etwa 100 Pa · s, und bei einer Temperatur von 100 °C in einem Bereich von etwa 25 Pa · s bis etwa 60 Pa s, wobei die Viskosität gemessen wurde mit einer Scherrate von 20 s⁻¹.

Der Aufheizblock weist vorteilhafterweise eine elektrische Regelung des Aufheizvorganges auf, welche bei einer mobilen Anwendung z. B. auch durch einen Stromgenerator oder eine sonstige zur Verfügung gestellte mobile Stromzufuhr erfolgen kann. Vorteilhafterweise weist der Aufheizblock bei einer Ausführung für die Aufnahme mindestens einer Kartuschenpistole zwei Heizpatronen oder -stäbe, bei einer Ausführung für mindestens zwei Kartuschenpistolen drei Heizpatronen oder -stäbe, bei einer Ausführung für mindestens drei Kartuschenpistolen vier Heizpatronen oder -stäbe und bei einer Ausführung für mindestens vier Kartuschenpistolen fünf Heizpatronen oder -stäbe auf, welche links und rechts der Längsseiten der Kartuschenpistolen im Heizblock angeordnet sind. Hierzu weist der Heizblock im Inneren Kanäle oder Hohlräume auf, durch welche Kabel zum Anschluss der Heizpatronen verlegbar als auch die Heizpatronen oder -stäbe aufnehmbar sind. Durch die Ausgestaltung eines derartig ausgebildeten Aufheizblockes ist vorteilhafterweise eine gleichmäßige Erwärmung der erfindungsgemäßen Masse ermöglicht. Nach Erwärmung beträgt vorteilhafterweise die Verarbeitungszeit für die erfindungsgemäße Masse bis zu etwa dreißig Minuten, je nach Verarbeitungsbedingungen, gegebenenfalls auch länger. Wird die erfindungsgemäße Masse in der Kartuschenpistole zu kalt, kann diese einfach in den Aufheizblock wieder eingelegt werden.

Alternativ zum Einsatz eines Aufheizblockes zur Erwärmung der erfindungsgemäßen Masse in einer Kartuschenpistole kann auch ein Austrag der erfindungsgemäßen Masse aus einem Handextruder, der beheizt ist, erfolgen. Der Handextruder weist dabei vorteilhafterweise eine oder mehrere Förderschnecken auf. Die erfindungsgemäße Masse wird bevorzugt in Form von Riegeln, oder aber auch als Granulat, in den Handextruder eingefüllt. Besonders bevorzugt ist eine kontinuierliche Zuführung in den Handextruder bei Ausgestaltung der erfindungsgemäßen Masse in Bandform.

Vorteilhafterweise wird bei dem erfindungsgemäßen Verfahren die Masse in einem Doppelschneckenextruder plastifiziert und erwärmt vor Austragung in eine Kartuschenpistole oder einen Handextruder. Dabei kann grundsätzlich eine Vorrichtung vorgesehen werden, wie diese beispielsweise in der EP 0 646 675 B1 offenbart ist, wobei deren diesbezügliche Offenbarung hiermit zum Gegenstand der vorliegenden Erfindung gemacht wird. Die Masse, die bei üblichen Umgebungstemperaturen bzw. Verarbeitungstemperaturen fest ist, kann dabei in Form von Riegeln dem Doppelschneckenextruder, gegebenenfalls unter Einsatz sonstiger Hilfsmittel wie Walzenpressen oder ähnlichem, insbesondere über einen Trichter, zugeführt werden und wird dann in diesem plastifiziert und erwärmt und ausgetragen. Die Austragung erfolgt dabei vorzugsweise in eine Kartuschenpistole, die in eine Öffnung eines Adaptermittels, welches außen vor der Extruderdüse an selbiger angeordnet ist, mit ihrer Austragsspitze eingeführt wird, so dass dann durch den Austrag der Masse aus dem Doppelschneckenextruder die Kartuschenpistole befüllt wird. Die Kartuschenpistole ist dabei vorteilhafterweise mit einem Hubkolben, der hitzebeständig ist, und beispielsweise aus Aluminium gefertigt ist, ausgestattet, und weist ein ebenso aus einem hitzebeständigem Material gefertigtes Austrittsmittel mit Spitze, ebenfalls beispielsweise aus Aluminium gefertigtem, auf. Der Hubkolben weist dabei an seiner Endplatte vorteilhafterweise angeordnet an deren Außenumfang eine Ringdichtung auf, die den Kolben gegen die Innenwand des zylindrischen Gehäuses der Kartuschenpistole abdichtet.

Vorzugsweise weist der Doppelschneckenextruder ein kombiniertes Lager- und Mischteil auf, welches neben zwei ersten Ausnehmungen als Lager für die beiden Schnecken des Doppelschneckenextruders eine Vielzahl um diese Ausnehmungen herum angeordnete Durchtrittsöffnungen aufweist, durch welche die Masse gefördert wird. Das Lager- und Mischteil ist damit nachfolgend den beiden Schnecken in Förderrichtung im Doppelschneckenextruder sowie vor der Austrittsdüse desselben angeordnet. Durch die Vielzahl von Durchtrittsöffnungen wird eine hohe Homogenisierung der plastifizierten und erwärmten Masse erreicht.

Vorteilhafterweise liegt die Verarbeitungstemperatur der erfindungsgemäßen Masse bei Verwendung einer Kartuschenpistole in einem Bereich von etwa 85 °C bis etwa 110 °C, weiter bevorzugt in einem Bereich von etwa 90 °C bis etwa 100 °C, wobei sich die Temperatur auf die Masse selbst bezieht. Wird z. B. ein Heißvergußkocher eingesetzt, kann die Verarbeitungstemperatur auch in einem Bereich von etwa 150 °C bis etwa 180 °C liegen.

Diese und weitere Vorteile der vorliegenden Erfindung werden anhand der nachfolgenden Beispiele und Figuren näher erläutert. Es zeigen
- Fig. 1:: einen zweiteiligen Aufheizblock zur Durchführung des erfindungsgemäßen Verfahrens in einer perspektivischen Ansicht;
- Fig. 2:: eine perspektivische Ansicht des Oberteils des zweiteiligen Aufheizblockes gemäß Fig. 1;
- Fig. 3:: eine Seitenansicht des oberen Teiles des zweiteiligen Aufheizblockes gemäß Fig. 1;
- Fig. 4:: eine Schnittansicht gemäß Schnitt A-A durch die Seitenansicht gemäß Fig. 3 des Aufheizblockes;
- Fig. 5:: eine Seitenansicht eines Doppelschneckenextruders mit angesetzter Kartuschenpistole;
- Fig. 6:: eine Schnittansicht gemäß des Schnittes A-A der Fig. 5;
- Fig. 7:: eine Draufsicht auf eine Extruderdüse für den Doppelschneckenextruder gemäß den Fig. 5 und 6;
- Fig. 8:: eine Schnittansicht der Extruderdüse gemäß Fig. 7 entlang des Schnittes A-A;
- Fig. 9:: eine perspektivische Ansicht der Extruderdüse gemäß den Fig. 7 und 8;
- Fig. 10:: eine Draufsicht auf ein kombiniertes Lager- und Mischteil des Doppelschneckenextruders gemäß den Fig. 5 und 6;
- Fig. 11:: eine perspektivische Ansicht des kombinierten Lager- und Mischteiles gemäß Fig. 10.

Zunächst sei voraus geschickt, dass die in den Figuren dargestellte Ausgestaltung des zweiteiligen Aufheizblockes als auch die Zusammensetzung der beispielhaften nachfolgend beschriebenen erfindungsgemäßen Masse nicht einschränkend auszulegen ist. Der Aufheizblock kann z. B. auch ein- oder mehrteilig ausgebildet sein. Vielmehr können die dort beschriebenen Merkmale untereinander mit denen in der Beschreibung oben beschriebenen Merkmale zur weiteren Ausgestaltung kombiniert werden. Des Weiteren sei darauf hingewiesen, dass die in der Figurenbeschreibung angegebenen Bezugszeichen den Schutzbereich der vorliegenden Erfindung nicht beschränken, sondern lediglich auf die in den Figuren gezeigten Ausführungsbeispiele verweisen. Gleiche Teile oder Teile mit gleicher Funktion weisen im Folgenden die gleichen Bezugszeichen auf.

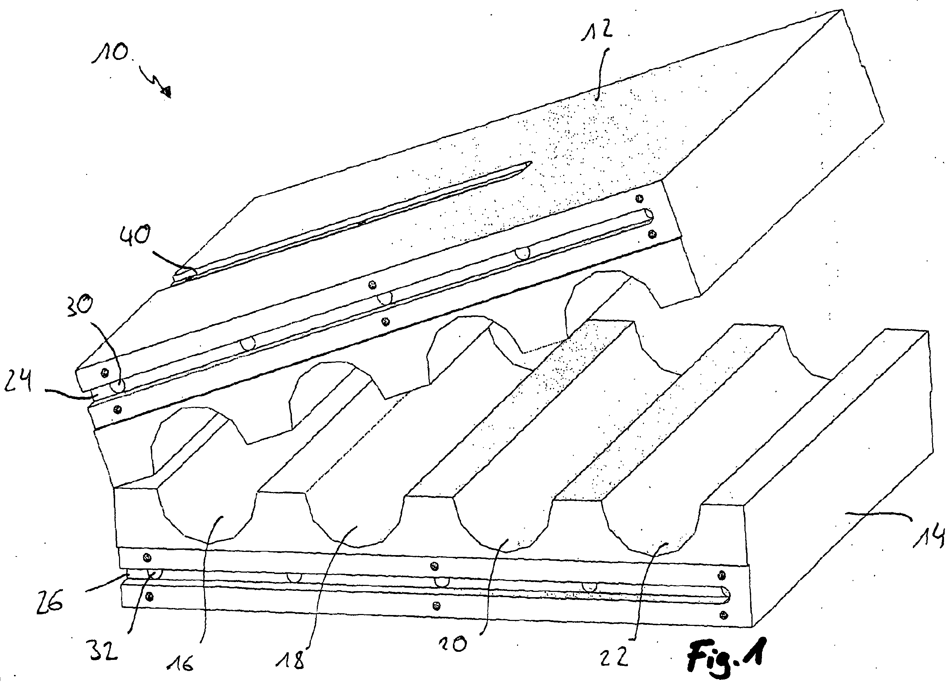

Fig. 1 zeigt eine insgesamt mit dem Bezugszeichen 10 bezeichneten zweiteiligen Aufheizblock mit einem oberen Teil 12 in einem unteren Teil 14. Der obere Teil 12 weist eine Aufnahme 40 zur Befestigung eines hier nicht gezeigten Temperatursensors auf. Eine entsprechende Aufnahme kann auch im unteren Teil 14 vorgesehen sein. Der obere Teil 12 und der untere Teil 14 sind symmetrisch zueinander ausgebildet. Beide weisen an den sich gegenüber liegenden Längsseiten Kanäle 24 beziehungsweise 26 auf sowie parallel zu den Querseiten verlaufende Kanäle 30 beziehungsweise 32. Die quer verlaufenden Kanäle 30 beziehungsweise 32 enden etwa mittig im oberen Teil 12 beziehungsweise unteren Teil 14, wobei gegenüber liegend ausgehend von der weiteren, in der Fig. 1 rückwärtigen Längsseite entsprechende Kanäle 30 und 32 ausgebildet sind.

Das obere Teil 12 und das untere Teil 14 können dabei auf einer Seite beispielsweise über übliche Scharniere miteinander verbunden sein, um eine einfachere Handhabung zu ermöglichen durch eine Bewegbarkeit der beiden Teile 12 und 14 zueinander. Außerdem kann ein Griff am oberen Teil 12, aber auch am unteren Teil 14, vorgesehen sein, der die Handhabung weiter erleichtert, wobei der Griff vorzugsweise an der einer Gelenkverbindung gegenüber liegenden Querseite des Aufheizblockes 10 angeordnet ist.

Die Kanäle 24 und 26, dienen einer Führung von Kabeln für Heizpatronen zur Erwärmung der in den Aufnahmen 16, 18, 20 und 22, die sowohl im oberen als auch im unteren Teil 12, 14 des Aufheizblockes 10 ausgebildet sind, aufzunehmenden Kartuschenpistolen. Der Aufheizblock 10 kann damit insgesamt 4 Kartuschenpistolen gleichzeitig aufnehmen und erwärmen. Die Wärme wird über in den Kanälen 30 beziehungsweise 32 angeordneten Heizpatronen erzeugt. Hierdurch ist eine ausgesprochen gleichmäßige Erwärmung der in den eingelegten Kartuschenpistolen aufgenommen erfindungsgemäßen Masse möglich. Diese wird vorteilhafterweise in Form von Riegeln oder Bändern oder aber auch in Form eines Granulates in die Kartuschenpistolen eingegeben.

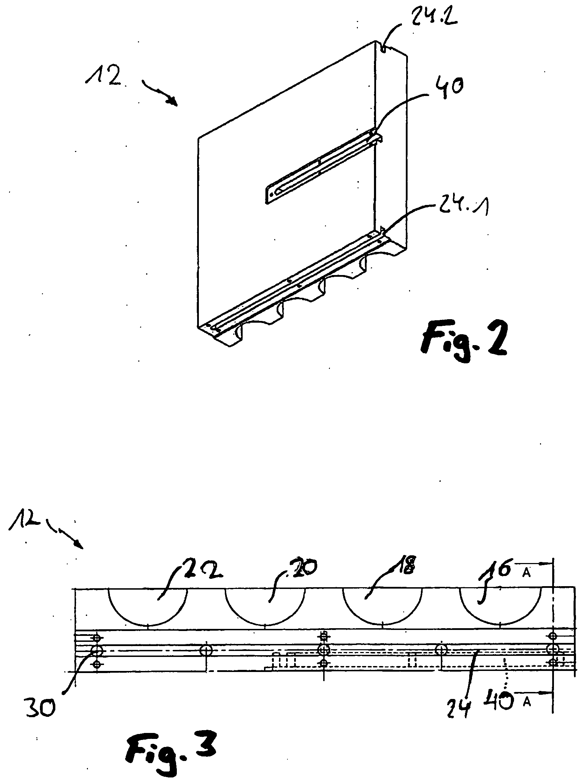

Fig. 2 zeigt in einer perspektivischen Ansicht das obere Teil 12 des Aufheizblockes 10 gemäß Fig. 1, aus welchem insbesondere die Ausgestaltung der Aufnahme 40 besser ersichtlich ist als auch die Anordnung von sich gegenüber liegenden Kanälen 24.1 und 24.2 an den Längsseiten desselben.

Fig. 3 zeigt in einer Seitenansicht die Ausgestaltung insbesondere des Kanals 24 mit insgesamt fünf Kanälen 30 für Heizpatronen, die jeweils links und rechts in Hinblick auf die Fig. 3 von einer Aufnahme 16, 18, 20 und 22 angeordnet sind, um eine gleichmäßige Erwärmung von in den Aufnahmen 16, 18, 20 und 22 angeordneten Kartuschenpistolen und der in diesen aufgenommenen erfindungsgemäßen Masse zu ermöglichen.

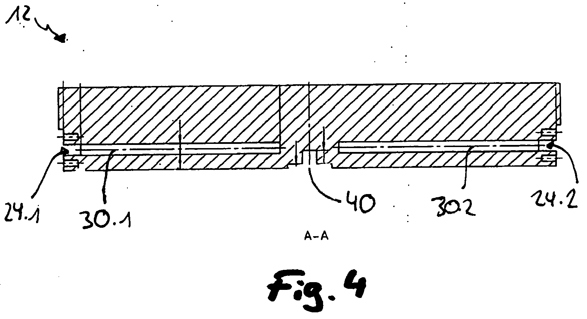

Fig. 4 zeigt schließlich entlang eines Schnittes A-A gemäß Fig. 3 die Ausgestaltung der sich gegenüber liegenden quer verlaufenden Kanäle 30.1 und 30.2, ausgehend von sich gegenüber liegenden, in den Längsseiten angeordneten Kanälen 24.1 und 24.2, als auch die Ausgestaltung des in Aufnahme 40 mit einer zentralen Vertiefung.

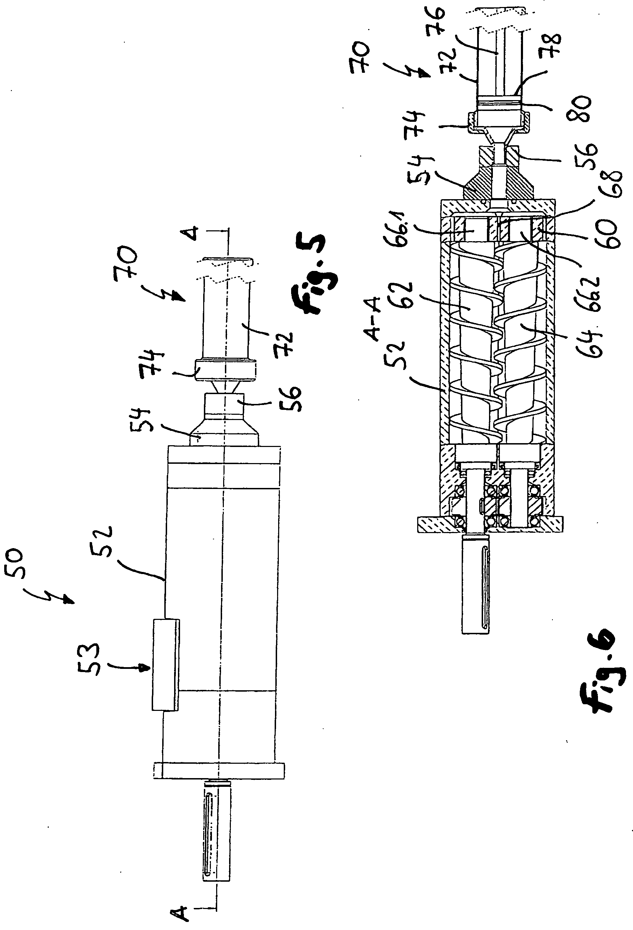

Fig. 5 zeigt in einer Seitenansicht einen Doppelschneckenextruder 50 mit angesetzter Kartuschenpistole 70, wie er im erfindungsgemäßen Verfahren einsetzbar ist. Der Doppelschneckenextruder 50 weist ein Gehäuse 52 mit einer Einfüllöffnung 53 auf. Nicht gezeigt ist in Fig. 5, dass die Einfüllöffnung 53 beispielsweise mit einem Trichter und darin angeordneter Walzenpresse verbunden sein kann, über welchen riegelförmige Masse dem Doppelschneckenextruder 50 zugeführt wird. Der Doppelschneckenextruder 50 weist weiterhin eine Extruderdüse 54 und ein Adaptermittel 56 auf, welches eine Öffnung aufweist, in welches das Austrittsmittel 74 mit einer Spitzenöffnung der Kartuschenpistole 70 einführbar ist, um plastifizierte und erwärmte bzw. erhitzte erfindungsgemäße Masse über den Doppelschneckenextruder 50 in die Kartuschenpistole 70 zu fördern.

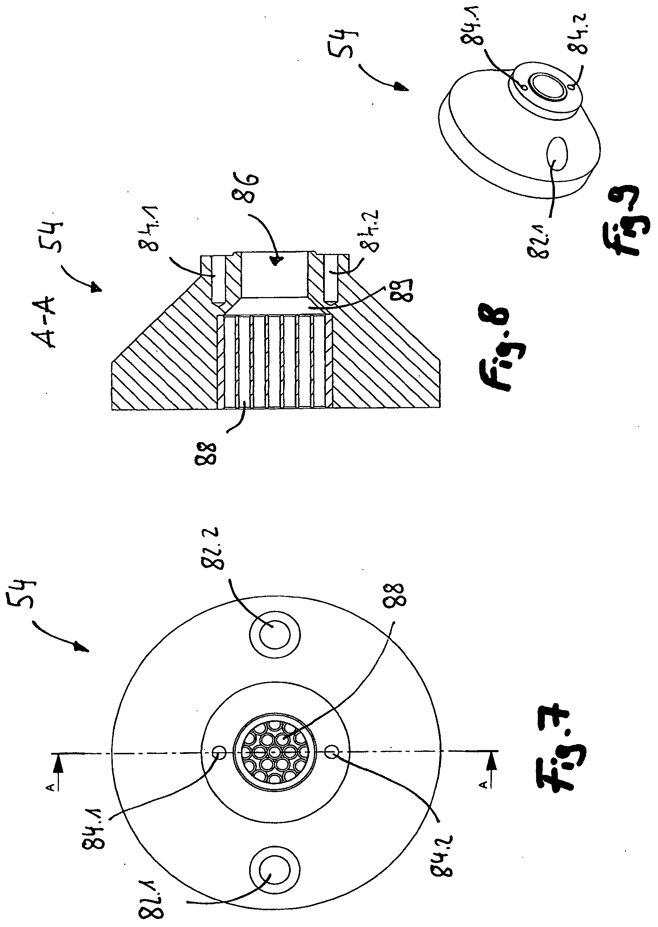

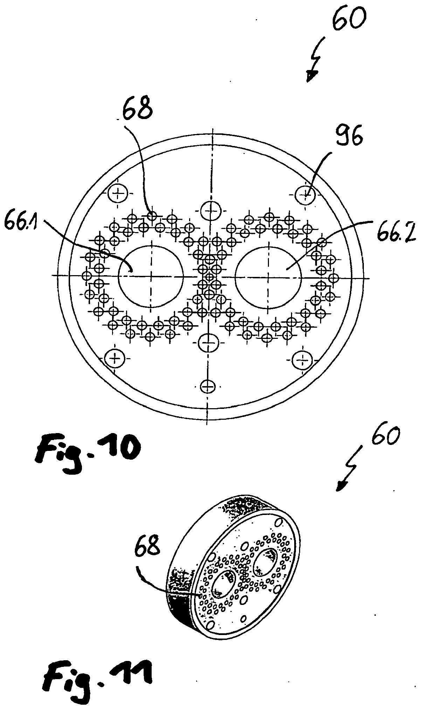

Fig. 6 zeigt den Doppelschneckenextruder 50 und die Kartuschenpistole 70 entlang eines Schnittes A-A der Fig. 5. Deutlich sind dabei die in dem Gehäuse 52 angeordneten beiden Schnecken 62 und 64 zu erkennen sowie ein kombiniertes Misch- und Lagerteil 60, welches Ausnehmungen 66.1 und 66.2 aufweist, in welche die der Extruderdüse zugewandten Enden der Schnecken 62 und 64 eingreifen und gelagert sind. Die Ausnehmungen 66.1 und 66.2 sind dabei als durchgehende Bohrrungen ausgebildet und bilden Lagerbuchsen für die Schnecken 62 und 64. Jedoch könnten die Ausnehmungen 66.1 und 66.2 beispielsweise auch als Sacklochbohrrungen oder in jeder anderen Art ausgebildet sein, um als Lager für die Schnecken 62 und 64 zu dienen. Das Lager- und Mischteil 60 weist eine Vielzahl von Durchtrittsöffnungen 68 auf (siehe hierzu Fig. 10 und 11). Am Kopf des Gehäuses 52 ist die Extruderdüse 54 angeordnet, welche hier beispielhaft mit einer zentralen Durchtrittsöffnung gezeigt ist. Alternativ hierzu können Extruderdüsen 54 vorgesehen werden, wie diese in den Fig. 7 bis 9 beschrieben sind. Die Extruderdüse 54 weist angesetzt an diese ein Adaptermittel 56 mit einer zentralen Öffnung auf, in welche das Austrittsmittel 74 der Kartuschenpistole 70, befestigt am Gehäuse 72 derselben, einführbar ist. Die Kartuschenpistole 70 weist im Inneren des Gehäuses 72 angeordnet einen Hubkolben 76 mit einem ringförmigen Endteil 78 auf, welches an seinem Außenumfang umlaufend eine Ringdichtung 80 aufweist. Das Austrittsteil 74 als auch der Hubkolben 76 mit Endteil 78 und auch das Gehäuse 72 sind vorzugsweise aus einem hitzefesten Material gefertigt, beispielsweise einem Kunststoff oder aber Aluminium. Die Kartuschenpistole 70 kann vorteilhafterweise derart verwendet werden, dass diese noch von einer Isoliermanschette umgeben ist, um eine unmittelbare Wärmeübertragung auf die Hände des Benutzers zu verhindern.

Die Fig. 7 bis 9 zeigen eine Extruderdüse 54, wie diese alternativ in dem Extruder gemäß den Fig. 5 und 6 einsetzbar ist. Diese Extruderdüse 54 weist eine zentrale Öffnung 86 auf. In Förderrichtung sind jedoch zunächst mehrere kreisförmige abgeordnete Durchtritte 88, auch als Bohrungen ansprechbar, vorgesehen, woran anschließend ein konisches Verbindungsteil 89 vorgesehen ist, welches eine Verbindung 86 zur Verfügung stellt. Die Extruderdüse weist dabei Öffnungen 82.1 und 82.2 zur Befestigung mittels Schrauben am Gehäuse des Doppelschneckenextruders auf, sowie Sacklochbohrungen 84.1 und 84.2 zur Befestigung eines Adaptermittels, wie dies in den Fig. 5 und 6 gezeigt ist.

Die Fig. 10 und 11 zeigen nun das Lager- und Mischteil 60 in einer Draufsicht und eine perspektivische Ansicht. Deutlich sind die als Lager dienenden Ausnehmungen 66.1. und 66.2 und die um diese herum angeordnete Vielzahl von Durchtrittsöffnungen 68 zu erkennen.

Eine erste beispielhafte erfindungsgemäße Masse ist hergestellt aus 54,5 Gew.-% eines Bitumen mit einer Nadelpenetration bei 25 °C gemäß DIN EN 1426 von etwa 160/0,1 mm bis etwa 220/0,1 mm, wobei die Masse weiterhin aufweist 7 Gew.-% eines Styrol-Isopren-Styrol/Styrol-Isopren-Blockcopolymers, 6 Gew.-% eines Gummimehls, hergestellt aus einem Rezyclat aus Gummiprodukten, insbesondere Autoreifen, mit einer Körnung in einem Bereich von > 0 mm bis etwa 0,5 mm, 1,5 Gew.-% eines Montanwachses mit einem Erstarrungspunkt in einem Bereich von etwa 130 bis etwa 150 °C, 1 Gew.-% eines gepropften Ethylen-Maleinsäureanhydrid-Copolymeren in Form von Pastillen, 10 Gew.-% eines naphthenischen Prozessöles als Weichmacher 18 Gew.-% Talkum als pulverförmiger mineralischer Füllstoff als auch 2 Gew.-% Cellulosefasern, wobei die Cellulose-Fasern eine durchschnittliche Faserlänge von 1000 µm und durchschnittliche Faserdicke von 40 µm aufwiesen, wobei sämtliche angegebenen Gewichtsprozente sich beziehen auf die Gesamtmenge der Mischung. Eine wie vorstehend hergestellte Masse wies bei einer Temperatur von 85 ° C eine dynamische Viskosität, gemessen gemäß DIN EN 13702, bei einer Scherrate von 20 s⁻¹ von 80 Pa · s, bei einer Temperatur von 90 °C von 66 Pa · s, bei einer Temperatur von 95 °C von 53 Pa · s, und bei einer Temperatur von 100 °C von 43 Pa s auf.

Weitere beispielhafte erfindungsgemäße Massen wurden hergestellt mit unterschiedlichen Anteilen eines gepfropften Ethylen-Maleinsäureanhydrid-Coplymeren mit einer Viskosität nach Brookfield von bei 140°C von 600 mPa · s (cps) als auch ein Vergleich mit zwei Ethylen (cps) - Acrylsäure-Copolymeren mit einer Viskosität nach Brookfield bis 140°C von 575 mPa · s (E) bzw. 600 mPa · s (cps) (F). Die einzelnen Zusammensetzungen sind der folgenden Tabelle zu entnehmen.

| Zusammensetzung | Vergleichsbeispiel A | Beispiel B | Beispiel C | Beispiel D | Beispiel E | Beispiel F |
|---|---|---|---|---|---|---|
| | [Gew-%] | [Gew.-%] | [Gew.-%] | [Gew.-%] | [Gew.-%] | [Gew.-%] |
| Bitumen | 53,6 | 53.1 | 52,5 | 50,9 | 50,9 | 50,9 |
| Styrol-Isopren-Styrol-Isopren-Styrolblock-Copolymer | 6,9 | 6,8 | 6,8 | 6,6 | 6,6 | 6,6 |
| Gummimehl | 5,9 | 5,9 | 5,8 | 5,6 | 5,6 | 5,6 |
| Montanwachs | 1,48 | 1,5 | 1,45 | 1,4 | 1,4 | 1.4 |
| Cellulosefasern | 1,97 | 2 | 1,93 | 1,87 | 1,87 | 1,87 |
| Gepropftes Ethylen-Maleinsäureanhydrid- bzw. Acrylsäure-Copolymer | - | 1 | 2 | 5 | 5 | 5 |
| Weichmacher | 11,96 | 11,8 | 11,72 | 11,36 | 11,36 | 11,36 |
| Talkum | 17,6 | 17,5 | 17,3 | 16.72 | 16,72 | 16,72 |
| Antioxidatlonsmittel | 0,27 | 0,26 | 0,26 | 0,25 | 0,25 | 0,25 |
| Thermischer Stabilisator | 0,27 | 0,26 | 0,26 | 0,25 | 0,25 | 0,25 |
| Stabilisationsmittel | 0,05 | 0,05 | 0,05 | 0,05 | 0,06 | 0,05 |

Im Vergleichsbeispiel A wurde auf das erfindungsgemäß eingesetzte Ethylen-Maleinsäureanhydrid-Copolymere verzichtet, die Beispiele B bis D weisen steigende Gew-%-Anteile desselben auf. Sämtliche Gew.-%-Anteile der Tabelle sind bezogen auf die Gesamtmenge der dort definierten Masse. Als Bitumen wurde ein solches mit einer Nadelpenetration bei 25°C gemäß DIN EN 1246 von etwa 160/0,1 mm bis etwa 220/0,1 mm eingesetzt. Das Gummimehl war hergestellt aus einem Rezyklat aus Gummiprodukten, insbesondere Autoreifen, und wies eine Körnung in einem Bereich von <0 mm bis etwa 0,5 mm auf. Die eingesetzten Cellulosefasern wiesen eine durchschnittliche Faserlänge von 1000 µm und eine durchschnittliche Faserdicke von 40 µm auf. Als Weichmacher wurde ein Prozessöl eingesetzt. Das eingesetzte Talkum wurde als pulverförmiger Mineralstoff eingesetzt. Als Antioxidationsmittel wurden sterisch gehinderte Phenolverbindungen eingesetzt, als Stabilisator aromatische Phosphite, und als thermisches Stabilsationsmittel ein sterisch gehindertes Triazin. Sämtliche genannten Substanzen wurden bei etwa 190°C für drei Stunden miteinander gemischt und verrührt. Die solchermaßen hergestellten Massen wurden in eine Versuchseinrichtung eingebracht, welche aus einer senkrecht aufgestellten Wand bestand, an welcher ein U-förmiges Profil mit einer Breite von 2 cm, einer Tiefe von 3 cm und einer Länge von 25 cm mit seiner Längsseite befestigt war, wobei das U-Profil zum Boden hin gerichtet auf eine in einem Winkel von 90°C hinzu ausgerichtete Unterplatte offen war. Das U-Profil wurde mit den Massen A-D mittels einer Kartuschenpistole befüllt und anschließend das Kriechverhalten über einen Zeitraum von 16 Stunden bis 63,5 Stunden bei unterschiedlichen Temperaturen beobachtet. Die Zusammenfassung der Ergebnisse der Bestimmung des Kriechverhaltens sind der nachfolgenden Tabelle zu entnehmen, wobei "n.b." für nicht bestimmbar steht, da die Massenzusammensetzung zu stark floß.

| Temperaturbelastung | Vergleichsbeispiel A | Beispiel B | Beispiel C | Beispiel D | Beispiel E | Beispiel F |
|---|---|---|---|---|---|---|
| 16h 50°C | ca. 5 mm | 0 mm | 0 mm | 0 mm | - | - |
| 16h 50°C + 2h 70°C | ca. 21mm | ca. 5 mm | 0 mm | 0 mm | 0 mm | 1 mm |
| 16h 50°C + 4h 70°C | > 50 mm | ca. 5 mm | 0 mm | 0 mm | 0 mm | 2mm |
| 16h 50°C + 6,5h 70°C | > 50 mm | ca. 5 mm | 0 mm | 0 mm | 0 mm | 2-3 mm |
| 16h 50°C + 24h 70°C | > 50 mm | ca. 15 mm | 0 mm | 0 mm | ca. 1 mm | ca. 30 mm |
| 16h 50°C + 24h 70°C + 2h 80°C | n.b. | n.b. | 0 mm | 0 mm | ca.3-4 mm | > 50 mm |
| 16h 50°C + 24h 70°C + 2h 80°C + 2h 90°C | n.b. | n.b. | ca.20 mm | ca. 1 mm | > 50 mm | > 50 mm |
| 16h 50°C + 24h 70°C + 2h 80°C + 21,5h 90°C | n.b. | n.b. | > 50 mm | ca. 1-2 mm | n.b. | n.b. |

Wie der Tabelle zu entnehmen ist, wies die Vergleichsmasse A ein nicht akzeptables Kriechverhalten auf, so dass schon bei einem Ablauf von 20 Stunden und einer Erhöhung der Temperatur auf 70°C für nur 4 Stunden die Masse mehr als 5 cm sich aus dem U-Profil in Richtung Boden heraus bewegte. Bei der erfindungsgemäßen Masse B konnte bei diesen Bedingungen bei 20 Stunden nur eine Bewegung um 5 mm festgestellt werden, bei den Massen C und D überhaupt keine Bewegung. Die Masse C begann erst bei sehr starker Temperaturbelastung über einen Zeitraum von 44 Stunden bei einer schrittweisen Erhöhung auf bis zu 90°C um 20 mm aus dem gefüllten U-Profil herauszukriechen in Richtung Boden der Versuchsvorrichtung. Die Werte für die Massen E und F waren deutlich schlechter als für die Masse D, obwohl die Gew.-%-Anteile gleich waren, und schlechter als bei Masse C. Ethylen-Maleinsäureanhydrid-Copolymere weisen damit gegenüber Ethylen-Acrylsäure-Copolymeren deutlich verbesserte Eigenschaften auf.

Im Unterschied zu aus dem Stand der Technik bekannten Heißvergussmassen weisen die vorstehend definierten erfindungsgemäßen Massen einen silikathaltigen und keinen carbonathaltigen Füllstoff auf sowie insbesondere Cellulose-Fasern als Stellmittel als auch als Kompatibilisator das Ethylen-Maleinsäureanhydrid-Copolymer, welches eine Einbindung unter anderem des faserförmigen Stellmittels in die Mischung ermöglicht.

Durch die vorliegende Erfindung wird damit eine Masse zur Verfügung gestellt für die Verfüllung von Fugen und/oder Rissen, insbesondere auch in vertikal verlaufenden Fugen und/oder Rissen, insbesondere in Betonbauteilen und Fahrbahndecken, eingesetzt werden kann, ebenso wie in horizontal angeordneten Fugen und/oder Rissen, sodass sich die aus dem Stand der Technik bekannten Probleme nicht ergeben. Sie ist sowohl für den Neubau als auch die Instandsetzung geeignet.

## Patentansprüche

1. Masse zum Ausfüllen und Verfüllen von Fugen und/oder Rissen, umfassend
- mindestens ein Bitumen in einer Menge in einem Bereich von etwa 30 Gew.-% bis etwa 75 Gew.-%;
- mindestens ein Elastomer, ausgewählt aus einer Gruppe umfassend Styrol-Butadien-Copolymere, Styrol-Butadien-Styrol-(Block-)Copolymere, Styrol-Isopren-(Block-)Copolymere und/oder Styrol-Isopren-Styrol-(Block-) Copolymere, synthetische und/oder natürliche Kautschuke, in einer Menge in einem Bereich von etwa 2,5 Gew.-% bis etwa 22 Gew.-%;
- mindestens einen pulverförmigen mineralischen Füllstoff in einer Menge in einem Bereich von etwa 12 Gew.-% bis etwa 35 Gew.-%;
- mindestens ein faserförmiges Stellmittel zur Einstellung der Festigkeit, ausgewählt aus einer Gruppe umfassend Zellulose, Glasfasern und/oder Kunststofffasern, in einer Menge in einem Bereich von etwa 0,5 Gew.-% bis etwa 5 Gew.-%; und
- mindestens ein Polymer, hergestellt aus einem Olefin und einer α, β-ungesättigten Carbonsäure und/oder einem α, β-ungesättigtem Carbonsäureanhydrid, in einer Menge in einem Bereich von etwa 0,1 Gew.-% bis etwa 8 Gew.-%, bevorzugt bis etwa 5 Gew.-%,
wobei die Gewichtsprozente jeweils bezogen sind auf die Gesamtmenge der Masse.

2. Masse gemäß Anspruch 1, **dadurch gekennzeichnet, dass** das Stellmittel eine durchschnittliche Faserlänge in einem Bereich von etwa 500 µm bis etwa 1500 µm aufweist.

3. Masse gemäß einem der vorhergehenden Ansprüche, **dadurch gekennzeichnet, dass** das Stellmittel eine durchschnittliche Faserdicke in einem Bereich von etwa 10 µm bis etwa 100 µm aufweist.

4. Masse gemäß einem der vorhergehenden Ansprüche, **dadurch gekennzeichnet, dass** das Polymer hergestellt ist aus einem Olefin, ausgewählt aus einer Gruppe umfassend Ethylen und/oder Propylen, und Maleinsäureanhydrid.

5. Masse gemäß einem der vorhergehenden Ansprüche, **dadurch gekennzeichnet, dass** diese mindestens ein Elastomer, ausgewählt aus einer Gruppe umfassend Styrol-Butadien-Copolymere, Styrol-Butadien-Styrol-Blockcopolymere, Styrol-Isopren-Styrol-Blockcopolymere, Styrol-Isopren-Blockcopolymere, Butadien-Kautschuke, Butyl-Kautschuke, halogenierte Butyl-Kautschuke und/oder natürlichen Kautschuk, umfasst

6. Masse gemäß einem der vorhergehenden Ansprüche, **dadurch gekennzeichnet, dass** diese weiterhin umfasst mindestens ein Wachs in einer Menge in einem Bereich von etwa 0,5 Gew.-% bis etwa 3 Gew.-%, bezogen auf die Gesamtmenge der Mischung.

7. Masse gemäß einem der vorhergehenden Ansprüche, **dadurch gekennzeichnet, dass** diese weiterhin umfasst mindestens einen Weichmacher, ausgewählt aus der Gruppe der aliphatischen und/oder naphtenischen Öle, in einer Menge in einem Bereich von etwa 5 Gew.-% bis etwa 15 Gew.-%.

8. Masse gemäß einem der vorhergehenden Ansprüche, **dadurch gekennzeichnet, dass** diese mindestens einen pulverförmigen mineralischen Füllstoff, ausgewählt ist aus einer Gruppe umfassend Silikate, Sulfate und/oder Phosphate, umfasst.

9. Verwendung einer Masse gemäß einem der vorhergehenden Ansprüche zur Verfüllung von Fugen und/oder Rissen in horizontalen und/oder vertikalen Flächen.

10. Verwendung gemäß Anspruch 9, **dadurch gekennzeichnet, dass** die Masse in vertikal ausgerichtete Fugen und/oder Risse verfüllt wird.

11. Verwendung gemäß einem der Ansprüche 9 oder10, **dadurch gekennzeichnet, dass** die Masse in LAU-Anlagen und/oder JGS-Anlagen, insbesondere Fahrsiloanlagen, eingesetzt wird.

12. Verfahren zur Verfüllung einer Fuge und/oder eines Risses mit einer Masse gemäß einem der Ansprüche 1 bis 8, **dadurch gekennzeichnet, dass** die Masse erwärmt und mittels einer Kartuschenpistole oder eines Handextruders in eine Fuge oder einen Riss eingebracht wird.

13. Verfahren gemäß Anspruch 12, **dadurch gekennzeichnet, dass** die Erwärmung der Masse in der Kartuschenpistole erfolgt durch Einlegung der Pistole in einen Aufheizblock mit mindestens einer in diesem angeordneten Heizpatrone.

14. Verfahren gemäß einem der Ansprüche 12 oder 13, **dadurch gekennzeichnet, dass** die Masse in einem Doppelschneckenextruder (50) vor Austragung in eine Kartuschenpistole (70) oder einen Handextruder plastifiziert und erwärmt wird.

15. Verfahren gemäß Anspruch 14, **dadurch gekennzeichnet, dass** der Doppelschneckenextruder (50) ein Lager- und Mischteil (60) aufweist, welches neben zwei ersten Ausnehmungen (66.1, 66.2) als Lager für Schnecken (62, 64) des Doppelschneckenextruders (50) eine Vielzahl von um die Ausnehmungen (66.1, 66.2) herum angeordnete Durchtrittsöffnungen aufweist, durch welche die Masse gefördert wird.

16. Verfahren gemäß einem der Ansprüche 14 oder 15, **dadurch gekennzeichnet, dass** die Kartuschenpistole (70) ein Mündungsstück (74) umfasst, welches in eine Öffnung eines Adapterteils (56) des Doppelschneckenextruders (50) eingeführt wird, um plastifizierte und erwärmte Masse aus dem Doppelschneckenextruder (50) in die Kartuschenpistole (70) zu überführen.

## Claims

1. Composition for the filling of joints and/or cracks, comprising
- at least one bitumen at a quantity in a range of about 30% by weight to about 75% by weight;
- at least one elastomer, selected from a group comprised of styrene butadiene copolymers, styrene butadiene styrene (block) copolymers, styrene isoprene (block) copolymers and/or styrene isoprene styrene (block) copolymers, synthetic and/or natural rubbers at a quantity in a range of about 2.5% by weight to about 22% by weight;
- at least one powdery mineral filler at a quantity in a range of about 12% by weight to about 35% by weight;
- at least one fibrous suspending agent to adjust the firmness, selected from a group comprised of cellulose, glass fibers and/or plastic fibers at a quantity in a range of about 0.5% by weight to about 5% by weight;
- at least one polymer, made from an olefin and one α, β-unsaturated carbon acid and/or α, β-unsaturated carbon acid anhydride, at a quantity in a range of about 0.1 % by weight to about 8% by weight, preferably to about 5% by weight;
whereby the % by weight always refers to the total weight of the composition.

2. Composition according to claim 1, **characterized in that** the suspending agent has an average fiber length in a range of about 500 µm to about 1,500 µm.

3. Composition according to one of the preceding claims, **characterized in that** the suspending agent has an average fiber thickness in a range of about 10 µm to about 100 µm.

4. Composition according to one of the preceding claims, **characterized in that** the polymer is made of an olefin, selected from a group comprised of ethylene and/or propylene, and maleic anhydride.

5. Composition according to one of the preceding claims, **characterized in that** the composition comprises at least one elastomer, selected from a group comprised of styrene butadiene copolymers, styrene butadiene styrene block copolymers, styrene isoprene styrene block polymers, styrene isoprene block polymers, butadiene rubber, butyl rubber, halogenated butyl rubber and/or natural rubber.

6. Composition according to one of the preceding claims, **characterized in that** the composition furthermore comprises at least one wax at a quantity in a range of about 0.5% by weight to about 3% by weight, referring to the total quantity of the mixture.

7. Composition according to one of the preceding claims, **characterized in that** the composition further comprises at least one plasticizer, selected from the group of aliphatic and/or napthenic oils, at a quantity in a range of about 5% by weight to about 15% by weight.

8. Composition according to one of the preceding claims, **characterized in that** the composition comprises at least one powdery mineral filler selected from a group comprised of silicates, sulfates and/or phosphates.

9. Use of a composition according to one of the preceding claims for the filling of joints and/or cracks in horizontal and/or vertical areas.

10. Use according to claim 9, **characterized in that** the composition is being filled into vertically oriented joints and/or cracks.

11. Use according to one of claims 9 or 10, **characterized in that** the composition is used in LAU and/or JGS facilities, especially silo facilities for vehicles.

12. Process for the filling of joints and/or cracks with a composition according to one of claims 1 through 8, **characterized in that** the composition is heated and inserted into a joint or crack by way of a caulking gun or hand extruder.

13. Process of claim 12, **characterized in that** the heating of the composition takes place inside the caulking gun through insertion of the caulking gun into a heating block including at least one heating cartridge arranged within the heating block.

14. Process according to one of claims 12 or 13, **characterized in that** the composition will be plasticized and heated in a twin-screw extruder (50) prior to placement into a caulking gun (70) or a hand extruder.

15. Process according to claim 14, **characterized in that** the twin-screw extruder (50) has a mixing and storage part (60), which in addition to two initial recesses (66.1, 66.2) as storage for screws (62, 64) of the twin-screw extruder (50) has a multitude of passage openings arranged around the recesses (66.1, 66.2), through which the composition is fed.

16. Process according to one of claims 14 or 15, **characterized in that** the caulking gun (70) encompasses the discharge medium (74), which is inserted into an opening or an adapter (56) of the twin-screw extruder (50), to transfer the plasticized and heated composition from the twin-screw extruder (50) into the caulking gun (70).

## Revendications

1. Masse de remplissage et de jointoiement de joints et/ou de fissures, comprenant
- au moins un bitume en une quantité de l'ordre d'environ 30 % en poids à environ 75 % en poids;
- au moins un élastomère, choisi dans un groupe comprenant des copolymères styrène-butadiène, des copolymères (blocs) styrène-butadiène-styrène, des copolymères (blocs) styrène-isoprène et/ou des copolymères (blocs) styrène-isoprène-styrène, des caoutchoucs synthétiques et/ou naturels, en une quantité de l'ordre d'environ 2,5 % en poids à environ 22 % en poids;
- au moins une charge minérale pulvérulente en une quantité de l'ordre d'environ 12 % en poids à environ 35 % en poids;
- au moins un agent de réglage fibreux pour le réglage de la résistance, choisi dans un groupe comprenant la cellulose, des fibres de verre et/ou des fibres synthétiques, en une quantité de l'ordre d'environ 0,5 % en poids à environ 5 % en poids;
- au moins un polymère, produit à partir d'une oléfine et d'un acide carbonique α,β-insaturé et/ou d'un anhydride de l'acide carbonique α,β-insaturé, en une quantité de l'ordre d'environ 0,1 % en poids à environ 8 % en poids, de préférence à environ 5 % en poids,
dans laquelle les pourcentages pondéraux sont chaque fois rapportés à la quantité totale de la masse.

2. Masse selon la revendication 1, **caractérisée en ce que** l'agent de réglage présente une longueur de fibre moyenne de l'ordre d'environ 500 µm à environ 1500 µm.

3. Masse selon l'une quelconque des revendications précédentes, **caractérisée en ce que** l'agent de réglage présente une épaisseur de fibre moyenne de l'ordre d'environ 10 µm à environ 100 µm.

4. Masse selon l'une quelconque des revendications précédentes, **caractérisée en ce que** le polymère est produit à partir d'une oléfine, choisie dans un groupe comprenant l'éthylène et/ou le propylène, et l'anhydride de l'acide maléique.

5. Masse selon l'une quelconque des revendications précédentes, **caractérisée en ce qu'**elle comprend au moins un élastomère, choisi dans un groupe comprenant des copolymères styrène-butadiène, des copolymères blocs styrène-butadiène-styrène, des copolymères blocs styrène-isoprène-styrène, des copolymères blocs styrène-isoprène, des caoutchoucs butadiènes, des caoutchoucs butyle, des caoutchoucs butyle halogénés et/ou du caoutchouc naturel.

6. Masse selon l'une quelconque des revendications précédentes, **caractérisée en ce qu'**elle comprend en outre au moins une cire en une quantité de l'ordre d'environ 0,5 % en poids à environ 3 % en poids, rapportée à la quantité totale du mélange.

7. Masse selon l'une quelconque des revendications précédentes, **caractérisée en ce qu'**elle comprend en outre au moins un plastifiant, choisi dans le groupe des huiles aliphatiques et/ou naphténiques, en une quantité de l'ordre d'environ 5 % en poids à environ 15 % en poids.

8. Masse selon l'une quelconque des revendications précédentes, **caractérisée en ce qu'**elle comprend au moins une charge minérale pulvérulente, choisie dans un groupe comprenant des silicates, des sulfates et/ou des phosphates.

9. Utilisation d'une masse selon l'une quelconque des revendications précédentes pour le jointoiement de joints et/ou de fissures dans des surfaces horizontales et/ou verticales.

10. Utilisation selon la revendication 9, **caractérisée en ce que** la masse est posée dans des joints et/ou des fissures orientés verticalement.

11. Utilisation selon l'une des revendications 9 ou 10, **caractérisée en ce que** la masse est utilisée dans des installations de stockage, remplissage et transbordement (LAU) et/ou des installations de stockage de purin, de lisier liquide et de jus d'ensilage (JGS), en particulier dans des batteries de silos mobiles.

12. Procédé de jointoiement d'un joint et/ou d'une fissure avec une masse selon l'une quelconque des revendications 1 à 8, **caractérisé en ce que** l'on chauffe la masse et on la pose dans un joint ou une fissure au moyen d'un pistolet à cartouche ou d'une extrudeuse à main.

13. Procédé selon la revendication 12, **caractérisé en ce que** l'on effectue le chauffage de la masse dans le pistolet à cartouche en introduisant le pistolet dans un bloc chauffant avec au moins une cartouche de chauffage disposée dans celui-ci.

14. Procédé selon l'une des revendications 12 ou 13, **caractérisé en ce que** l'on plastifie et on chauffe la masse dans une boudineuse à deux vis (50) avant son expulsion dans un pistolet à cartouche (70) ou une extrudeuse à main.

15. Procédé selon la revendication 14, **caractérisé en ce que** la boudineuse à deux vis (50) présente une partie de palier et de mélange (60), qui possède, en plus de deux premiers évidements (66.1, 66.2) comme paliers pour les vis (62, 64) de la boudineuse à deux vis (50), une multiplicité d'ouvertures de passage disposées autour des évidements (66.1, 66.2), à travers lesquelles la masse est transportée.

16. Procédé selon l'une des revendications 14 ou 15, **caractérisé en ce que** le pistolet à cartouche (70) comprend une embouchure (74), que l'on introduit dans une ouverture d'une pièce d'adaptateur (56) de la boudineuse à deux vis (50), pour transférer la masse plastifiée et chauffée de la boudineuse à deux vis (50) au pistolet à cartouche (70).
